Europäisches Patentamt

European Patent Office

Office européen des brevets

(11) Numéro de publication: **0 181 803**
**B1**

(12) **FASCICULE DE BREVET EUROPEEN**

(45) Date de publication du fascicule du brevet:
08.02.89

(21) Numéro de dépôt: **85402054.2**

(22) Date de dépôt: **23.10.85**

(51) Int. Cl.⁴: **C 01 B 33/04**

(54) Procédé de fabrication de barreaux de silicium ultra-pur.

(30) Priorité: **30.10.84 FR 8416544**

(43) Date de publication de la demande:
**21.05.86 Bulletin 86/21**

(45) Mention de la délivrance du brevet:
**08.02.89 Bulletin 89/6**

(84) Etats contractants désignés:
**AT BE CH DE FR GB IT LI NL**

(56) Documents cités:
**DE-A- 2 808 461**
**DE-A- 2 808 462**
**FR-A- 1 256 290**
**NL-A- 292 610**

**CHEMICAL ABSTRACTS, vol. 81, no. 22, 2 décembre 1974, page 178, no. 139064q, Columbus, Ohio, US; & JP - A - 74 76 721 (TATSUO KUATOMI) 24-07-1974**

(73) Titulaire: **RHONE-POULENC CHIMIE, 25, quai Paul Doumer, F-92408 Courbevoie Cédex (FR)**

(72) Inventeur: **Jacubert, Serge, 12, rue Jules Herbron, F-78220 Viroflay (FR)**
Inventeur: **Boudot, Bernard, 146, boulevard Diderot, F-75012 Paris (FR)**
Inventeur: **Nataf, Philippe, 7, avenue des Cèdres, F-92410 Ville d'Avray (FR)**

(74) Mandataire: **Esson, Jean-Pierre et al, Rhône-Poulenc Interservices Service Brevets Chimie 25, quai Paul Doumer, F-92408 Courbevoie Cedex (FR)**

ACTORUM AG

## Description

La présente invention concerne un procédé de fabrication de barreaux de silicium ultra-pur. Elle a trait plus particulièrement à la fabrication de barreaux de silicium par pyrolyse de monosilane sur des supports allongés en silicium chauffés au rouge, les barreaux obtenus étant utilisables dans l'industrie électronique des semi-conducteurs.

Il est connu de fabriquer des barreaux de silicium ultra-pur utilisables dans l'industrie des semi-conducteurs par réduction par l'hydrogène d'un composé gazeux halogéné du silicium comme le tétrachlorure de silicium ou le trichlorosilane et par dépôt du silicium de haute pureté sur des supports chauffés au rouge en silicium ou en métal à haut point de fusion comme le tungstène. De tels procédés ont été décrits, par exemple, dans les brevets des Etats-Unis d'Amérique n° 3 023 087, 4 173 944, 4 179 530 et 4 311 545.

Cependant, la réaction de décomposition par pyrolyse du monosilane sur un support chauffé au rouge pour fabriquer des barreaux de silicium de pureté électronique diffère de la réaction à partir d'un composé halogéné du silicium en raison notamment des matières premières, des sous-produits formés très différents et des températures des gaz et des barreaux également très différentes. On a déjà proposé, d'après le brevet des Etats-Unis d'Amérique n° 3 147 141, un dispositif pour décomposer du monosilane. Le procédé mis en oeuvre dans ce dispositif ne permet pas d'obtenir des vitesses de décomposition intéressantes pour des barreaux de grande taille dans des conditions économiquement acceptables, de plus il conduit à des coûts énergétiques élevés et nécessite la mise en oeuvre d'un dispositif d'absorption d'hydrogène.

Pour pallier ces inconvénients il a été proposé selon les brevets des Etats-Unis d'Amérique n° 4 147 814 et 4 150 168 un procédé et un dispositif pour décomposer du silane pur pour obtenir des barreaux de silicium. Selon ce procédé le monosilane pur, c'est-à-dire non dilué, est introduit dans la cloche de décomposition par des injecteurs disposés en plusieurs endroits le long du décomposeur. De plus, afin d'obtenir un barreau de la forme la plus régulière possible malgré l'augmentation considérable de la chaleur émise par les barreaux au fur et à mesure de la croissance de leur diamètre, le décomposeur comprend des écrans thermiques internes refroidis par circulation d'eau et situés entre les différents barreaux.

Un tel procédé de dépôt de silicium présente cependant les inconvénients suivants:

— du fait notamment de la décomposition en phase gazeuse du monosilane en poudre nocive au bon fonctionnement du décomposeur, le rendement matière de la cloche, c'est-à-dire la productivité en silicium déposé par rapport au silicium introduit sous forme de monosilane s'avère peu satisfaisant,

— de plus, la vitesse de dépôt du silicium ainsi que le diamètre atteint par le barreau en fin de dépôt ne sont pas suffisants.

Il a été également proposé par le brevet NL-292 610 un procédé et un dispositif pour obtenir des barreaux de silicium par décomposition de silane, dans lequel au moins une partie de l'hydrogène sortant du décomposeur est recyclé à l'alimentation de celui-ci. Toutefois, ce procédé qui permet de régler la concentration en monosilane dans le décomposeur, ne permet pas d'éviter ou de limiter la décomposition en phase gazeuse du monosilane en poudre de silicium nocive au bon fonctionnement du décomposeur comme indiqué ci-dessus.

Par rapport aux procédés et dispositifs de l'art antérieur, la présente invention se propose notamment d'atteindre les buts suivants:

— augmenter la vitesse de dépôt du silicium, ce qui se traduit par un abaissement de la consommation électrique et une augmentation de la productivité en silicium déposé,

— augmenter le diamètre final du barreau obtenu,

— minimiser les sous-produits, c'est-à-dire augmenter le rendement matière du décomposeur.

La demanderesse a découvert que, d'une manière tout à fait surprenante, pour atteindre les buts fixés pour la présente invention, la présence d'écrans thermiques internes refroidis et l'injection multi étagée du monosilane n'étaient pas nécessaires contrairement à ce qui avait été décrit dans l'art antérieur.

La présente invention concerne en effet un procédé de fabrication de barreaux de silicium dans un décomposeur par pyrolyse du monosilane alimentant le décomposeur sur un barreau support qui a été préalablement chauffé au rouge, caractérisé en ce que le mélange réactionnel sortant du décomposeur est recyclé en majorité à l'alimentation du décomposeur.

Les gaz sortant du décomposeur et qui sont recyclés sont soumis, après refroidissement, à une filtration afin d'éliminer la poudre de silicium qu'ils peuvent véhiculer. Cette filtration permet d'éliminer les inconvénients liés à la présence et à l'accumulation de la poudre de silicium dans le décomposeur, notamment les pertes thermiques qui augmentent les dépenses énergétiques, favorisent la formation de sous-produits indésirables et limitent la durée du dépôt; cette filtration permet en outre d'améliorer le régularité du dépôt de silicium sur le barreau.

La filtration est assurée par tout moyen adapté et par exemple à l'aide d'un filtre à manches.

Le décomposeur mis en oeuvre selon le procédé de l'invention est un réacteur classique permettant la pyrolyse du monosilane, c'est-à-dire qu'il est pourvu des moyens de chauffage des barreaux support, par exemple par passage du courant électrique et qu'en outre il est pourvu de moyen de refroidissement de son enveloppe externe par exemple à l'aide d'une double enveloppe refroidie par circulation d'eau. Un tel décomposeur est notamment décrit dans le brevet des Etats-Unis d'Amérique n° 3 147 141. La nature du barreau support est de préférence du silicium ultra-pur, toutefois d'autres matières comme, par exemple, le tungstène qui est classiquement utilisé dans ce genre de décomposeur rentre dans le cadre de l'invention.

Selon l'invention, le mélange réactionnel sortant du décomposeur est recyclé en majorité à l'alimentation du décomposeur. On entend par majorité au moins 50% en volume et, de préférence de 85 à 98%. Le débit de recyclage est réglé en fonction de l'avancement du dépôt de silicium sur le barreau. Ainsi, ce débit doit être supérieur à 20 Nm³/h par kg de silicium déposé par heure. En-dessous de ce débit, les vitesses de dépôt s'avèrent inintéressantes. De préférence, ce débit est compris entre 20 et 2000 Nm³/h par kg de silicium déposé par heure et plus particulièrement entre 300 et 1200. Ce recyclage permet de maintenir les gaz à l'intérieur du décomposeur à une température inférieure à 300°C et généralement entre 50°C et 200°C.

Le débit de recyclage peut être assuré par tout moyen adapté et, par exemple, par un ventilateur basse pression muni d'un dispositif de variation de débit.

Les gaz non recyclés sont évacués à l'extérieur du système par exemple à l'aide d'un dispositif de purge maintenant la pression constante dans le décomposeur. On peut également envisager un dispositif ne purgeant que l'hydrogène contenu dans les gaz, par exemple à l'aide d'un adsorbant sélectif de l'hydrogène ou d'une séparation par perméation gazeuse.

Par ailleurs, selon un mode de mise en oeuvre préféré de l'invention la concentration en monosilane dans le décomposeur est maintenue à une valeur constante par réglage du débit d'appoint de monosilane non dilué à l'alimentation du décomposeur. De préférence la concentration en monosilane dans le décomposeur est maintenue entre 0,5 et 5% et de préférence entre 1,5 et 3% molaire. Pour un dépôt de 1 kg de silicium par heure le débit d'appoint en monosilane est compris entre 1,15 et 1,5 kg par heure et de préférence entre 1,15 et 1,35 kg par heure.

Le procédé de l'invention peut être mis en oeuvre à la pression atmosphérique augmentée de la perte de charge des différents appareils ou bien à une pression supérieure, par exemple jusqu'à 10 bars absolus.

De plus, l'endroit où l'on opère l'évacuation des gaz non recyclés (purge) n'est pas critique; on préférera cependant opérer celle-ci en amont des opérations de refroidissement, de filtration et de recyclage.

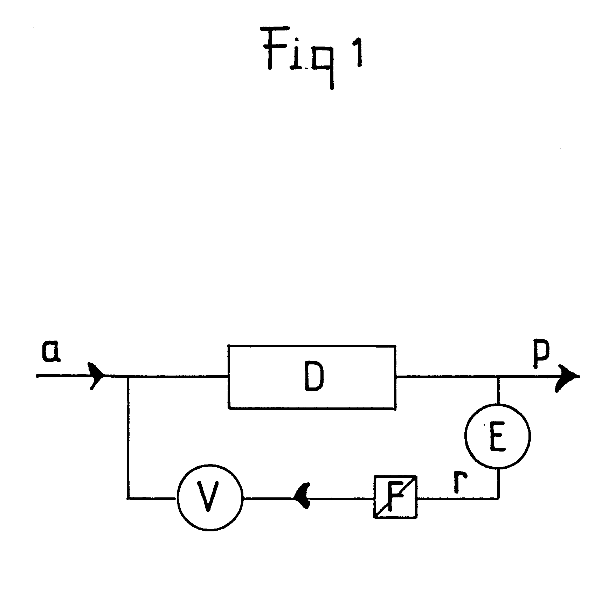

La présente invention va maintenant être décrite dans un mode de réalisation particulièrement préféré en faisant référence au schéma de principe de la figure 1.

1) Le décomposeur (D) est constitué d'une enceinte en acier inoxydable à double enveloppe, refroidie par circulation d'eau. Cette enceinte est munie de passages de courant électrique pour assurer le chauffage par effet Joule de barreaux ou de ponts de silicium à faire croître. Le courant a une intensité réglée pour maintenir constante la température du barreau qui est mesurée par pyrométrie optique.

2) Le recyclage des gaz (r) est assuré par un ventilateur basse pression (V) muni d'un dispositif de variation de débit et précédé d'un filtre (F). Les gaz recyclés sont refroidis dans l'échangeur (E).

3) L'appoint en silane pur (a) est effectué à partir d'une réserve sous pression, à l'aide d'un débitmètre dont la consigne est réglée pour maintenir constante la concentration en monosilane dans les gaz à l'intérieur du décomposeur. La mesure de cette concentration est faite par chromatographie en phase gazeuse. La purge (p) est assurée par un dispositif de détente des gaz maintenant la pression amont constante.

Le procédé selon l'invention permet notamment d'obtenir des vitesses de dépôt de silicium 5 à 15 μm/mn et généralement de l'ordre de 9 à 10 μm/mn en atteignant un diamètre final pour le barreau, de 5 à 15 cm et généralement de l'ordre de 10 à 12 cm tout en ayant un rendement matière du décomposeur supérieur à 90% et généralement à 95% pour une consommation électrique inférieure à 120 kWh/kg de silicium déposé et fréquemment inférieure à 100 kWh/kg de silicium déposé.

Les exemples ci-après illustrent l'invention sans en limiter la portée.

*Exemple 1*

Le décomposeur utilisé est réalisé entièrement en acier inoxydable et est constitué d'une plaque de base à double enveloppe refroidie par circulation d'eau. Cette plaque est munie:

— de quatre passages de courant refroidis par circulation d'eau et étanches aux gaz munis chacun d'un dispositif supportant le barreau,

— d'une injection de monosilane à double enveloppe refroidie par circulation d'eau,

— et d'une virole de forme cylindrique verticale (1,2 m de hauteur) surmontée d'un fond hémisphérique, l'ensemble étant muni d'une double enveloppe refroidie par circulation d'eau. Une ouverture est ménagée dans la partie verticale de la virole pour permettre une mesure de température des barreaux par pyrométrie optique. Cette partie haute est reliée à la plaque de base par une bride permettant son désaccouplement à la fin du dépôt pour récupération du silicium déposé.

On a effectué le dépôt pendant une durée de 4 heures ce qui a permis de récupérer 890 grammes de silicium sur un seul pont d'une longueur totale de 2 m. Au cours de ce dépôt le diamètre moyen est passé de 3 cm à environ 3,4 cm. Les conditions opératoires étaient:

— Concentration (molaire) en SiH₄ à l'entrée du décomposeur: 3,4%
— Concentration (molaire) en SiH₄ à la sortie du décomposeur: 2,5%
— Température des gaz à l'entrée: 40°C
— Température des gaz à la sortie: 170°C
— Débits du recyclage: 18 Nm³/h

La pression était dans le décomposeur de 0,8 bars relatifs.

— Poudre récupérée par filtration: 4,5 g sur les 4 heures
— Consommation énergétique: 110 kWh/kg
— Rendement matière:

$$\left(\frac{\text{silicium déposé}}{\text{silicium introduit sous forme de monosilane}}\right) = 95\%$$

— la valeur moyenne du débit d'appoint en monosilane était: 0,25 kg/h
— le débit de purge était: 0,35 Nm³/h contenant environ 0,012 kg/h de monosilane

## Exemple 2

Le même décomposeur que celui utilisé dans l'exemple 1 a permis d'effectuer un dépôt de longue durée et de faire croître deux ponts de 2 m de long depuis le diamètre initial de 1 cm jusqu'à un diamètre final de l'ordre de 10 cm. La quantité récupérée était d'environ 70 kg pour une durée de dépôt de 3 jours et demi. La poudre récupérée dans le filtre était de l'ordre de 600 g et n'a occasionné aucune perte de charge importante sur le filtre dont la surface filtrante était de 20 m².

Le débit de recyclage assuré par le ventilateur a varié depuis 20 Nm³/h au démarrage jusqu'à 950 Nm³/h.

La température des gaz en sortie n'a pas excédé 150°C en fin de dépôt, la pression dans le décomposeur étant de 1 bar relatif.

La consommation énergétique moyenne était de l'ordre de 95 kWh/kg de silicium déposé.

Le débit d'appoint était

$$\left(\frac{\text{Kg/h de monosilane}}{\text{Kg/h de silicium déposé}}\right) = 1{,}22$$

Le débit de purge était

$$\left(\frac{\text{en Nm}^3/\text{h}}{\text{Kg/h de silicium déposé}}\right) = 1{,}7$$

Le rendement matière moyen obtenu a été de 94% environ.

## Revendications

1. Procédé de fabrication de barreaux de silicium dans un décomposeur par pyrolyse du monosilane alimentant le décomposeur sur un barreau support qui a été préalablement chauffé au rouge, caractérisé en ce que le mélange réactionnel sortant du décomposeur est recyclé en majorité à l'alimentation du décomposeur, après avoir été refroidi et filtré.

2. Procédé selon la revendication 1, caractérisé en ce que le recyclage est compris entre 85 et 98% en volume.

3. Procédé selon la revendication 1 ou 2, caractérisé en ce que le débit de recyclage est supérieur à 20 Nm³/h par kg de silicium déposé par heure.

4. Procédé selon la revendication 3, caractérisé en ce que ce débit est compris entre 20 Nm³/h et 2000 Nm³/h par kg de silicium déposé par heure et plus plarticulièrement entre 300 Nm³/h et 1200 Nm³/h par kg de silicium déposé par heure.

5. Procédé selon la revendication 1, caractérisé en ce que les gaz non recyclés sont évacués à l'extérieur du système à l'aide d'un dispositif de purge maintenant la pression constante dans le décomposeur.

6. Procédé selon la revendication 1, caractérisé en ce que la concentration en monosilane dans le décomposeur est maintenue à une valeur constante par réglage du débit d'appoint de monosilane non dilué à l'alimentation du décomposeur.

7. Procédé selon la revendication 6, caractérisé en ce que la concentration en monosilane dans le décomposeur est maintenue entre 0,5 et 5% et de préférence entre 1,5 et 3% molaire.

8. Procédé selon la revendication 6, caractérisé en ce que pour un dépôt de 1 kg par heure de silicium, le débit d'appoint en monosilane est compris entre 1,15 et 1,5 kg par heure et de préférence entre 1,15 et 1,35 kg par heure.

9. Procédé selon la revendication 1, caractérisé en ce qu'il est mis en oeuvre à la pression atmosphérique augmentée de la perte de charge des différents appareils ou à une pression supérieure pouvant aller jusqu'à 10 bars absolus.

## Patentansprüche

1. Verfahren zur Herstellung von Siliciumstäben in einem Zersetzer durch Pyrolyse von Monosilan, mit dem der Zersetzer gespeist wird, auf einer Stabhalterung, die vorher auf Rotglut erhitzt wurde, dadurch gekennzeichnet, dass das Reaktionsgemisch, das aus dem Zersetzer austritt, zum grössten Teil zur Zuführung des Zersetzers zurückgeführt wird, nachdem es abgekühlt und filtriert wurde.

2. Verfahren nach Anspruch 1, dadurch gekennzeichnet, dass zwischen 85 und 98 Vol.-% rückgeführt werden.

3. Verfahren nach Anspruch 1 oder 2, dadurch gekennzeichnet, dass der Durchsatz der Rückführung grösser ist als 20 Nm³/h pro kg des pro Stunde abgelagerten Siliciums.

4. Verfahren nach Anspruch 3, dadurch gekennzeichnet, dass dieser Durchsatz zwischen 20 Nm³/h und 2000 Nm³/h pro kg des pro Stunde abgelagerten Siliciums und insbesondere zwischen 300 Nm³/h und 1200 Nm³/h pro kg des pro Stunde abgelagerten Siliciums beträgt.

5. Verfahren nach Anspruch 1, dadurch gekennzeichnet, dass die nicht rückgeführten Gase ausserhalb des Systems mit Hilfe einer Reinigungsvorrichtung evakuiert werden, die den Druck im Zersetzer konstant hält.

6. Verfahren nach Anspruch 1, dadurch gekennzeichnet, dass die Konzentration an Monosilan im Zersetzer auf einem konstanten Wert gehalten wird, durch Regelung der zusätzlichen Durchsatzmenge an nicht verdünntem Monosilan an der Zuführung des Zersetzers.

7. Verfahren nach Anspruch 6, dadurch gekennzeichnet, dass die Konzentration an Monosilan in dem Zersetzer zwischen 0,5 und 5% und vorzugsweise zwischen 1,5 und 3 Mol-% gehalten wird.

8. Verfahren nach Anspruch 6, dadurch gekennzeichnet, dass für eine Ablagerung von 1 kg Silicium pro Stunde die zusätzliche Durchsatzmenge an Monosilan zwischen 1,15 und 1,5 kg pro Stunde und vorzugsweise zwischen 1,15 und 1,35 kg pro Stunde liegt.

9. Verfahren nach Anspruch 1, dadurch gekennzeichnet, dass es bei atmosphärischem Druck durchgeführt wird, der erhöht ist um den Druckverlust der verschiedenen Apparaturen, oder bei einem höheren Druck, der bis zu 10 bar absolut betragen kann.

## Claims

1. Process for manufacturing silicon bars in a decomposer by pyrolysis of the monosilane which feeds the decomposer on a support bar which has been heated beforehand to redness, characterized in that the majority of the reaction mixture emerging from the decomposer is recycled to the feed of the decomposer, after having been cooled and filtered.

2. Process according to Claim 1, characterized in that the recycling is between 85 and 98% by volume.

3. Process according to Claim 1 or 2, characterized in that the recycling flow rate is greater than 20 Nm$^3$/h per kg of silicon deposited per hour.

4. Process according to Claim 3, characterized in that this flow rate is between 20 Nm$^3$/h and 2000 Nm$^3$/h per kg of silicon deposited per hour, and more especially between 300 Nm$^3$/h and 1200 Nm$^3$/h per kg of silicon deposited per hour.

5. Process according to Claim 1, characterized in that the non-recycled gases are discharged outside the system by means of a bleed device which maintains the pressure constant in the decomposer.

6. Process according to Claim 1, characterized in that the monosilane concentration in the decomposer is maintained at a constant value by adjusting the top-up rate of undiluted monosilane at the feed of the decomposer.

7. Process according to Claim 6, characterized in that the monosilane concentration in the decomposer is maintained at between 0.5 and 5, and preferably between 1.5 and 3, molar %.

8. Process according to Claim 6, characterized in that, for a deposition of 1 kg of silicon per hour, the monosilane top-up rate is between 1.15 and 1.5 kg per hour, and preferably between 1.15 and 1.35 kg per hour.

9. Process according to Claim 1, characterized in that it is carried out at atmospheric pressure increased by the pressure drop of the different apparatuses, or at a higher pressure which can range up to 10 bars absolute.

# Fiq 1